# NEUE EUROPÄISCHE PATENTSCHRIFT

(11) **EP 2 024 677 B2**
(45) Veröffentlichungstag und Bekanntmachung des Hinweises auf die Entscheidung über den Einspruch: **09.11.2016**
(45) Hinweis auf die Patenterteilung: 06.01.2010
(21) Anmeldenummer: 07819359.6
(22) Anmeldetag: 26.10.2007
(51) Int. Cl.: F17C 5/06, B60R 21/26

(54) **VERFAHREN UND VORRICHTUNG ZUR HERSTELLUNG EINES GASGENERATORS UND DURCH DAS VERFAHREN HERGESTELLTER GASGENERATOR**
METHOD AND DEVICE FOR PRODUCING A GAS GENERATOR, AND GAS GENERATOR PRODUCED BY MEANS OF THE METHOD
PROCÉDÉ ET DISPOSITIF DE FABRICATION D'UN GÉNÉRATEUR DE GAZ ET GÉNÉRATEUR DE GAZ FABRIQUÉ AVEC LE PROCÉDÉ

(30) Priorität: 26.10.2006 DE 102006051170
(43) Veröffentlichungstag der Anmeldung: 18.02.2009
(73) Patentinhaber: Takata AG, 63743 Aschaffenburg (DE)
(72) Erfinder: SATTLER, Peter, 04703 Bockelwitz (DE); HOCK, Joachim, 63762 Grossostheim (DE)
(74) Vertreter: Maikowski & Ninnemann Patentanwälte Partnerschaft mbB
(86) Internationale Anmeldenummer: PCT/EP2007/009314
(87) Internationale Veröffentlichungsnummer: WO 2008/049627

(56) Entgegenhaltungen:
- EP-A- 0 802 090
- EP-A- 0 822 126
- EP-A- 1 346 885
- EP-A- 1 598 244
- WO-A-97/42063
- WO-A1-97/06988
- WO-A1-98/24662
- DE-A1- 2 457 501
- DE-A1- 10 342 975
- DE-B2- 2 811 786
- DE-C1- 4 208 841
- DE-C2- 4 436 016
- DE-U1- 20 016 695
- DE-U1- 20 318 283
- DE-U1-202005 012 341
- GB-A- 1 592 135
- US- - 5 196 669
- US-A- 586 633
- US-A- 3 081 587
- US-A- 4 651 497
- US-A1- 2006 201 572
- US-U- 3 983 678
- US-U- 5 845 461

## Beschreibung

Die Erfindung betrifft ein Verfahren zur Herstellung eines Gasgenerators für eine Airbagvorrichtung für ein Kraftfahrzeug sowie eine Vorrichtung zur Herstellung eines Gasgenerators gemäß dem Oberbegriff des Anspruchs 12.

Bei einem derartigen Verfahren zur Herstellung eines Gasgenerators, bei dem das zum Aufblasen eines Kraftfahrzeug-Airbags dienende Gas in einem Gehäuse des Gasgenerators gespeichert ist und bei Zündung des Gasgenerators freigesetzt wird, wird zunächst ein Gehäuse des Gasgenerators, das eine über eine Öffnung mit Gas befüllbare Aufnahme bildet, zumindest abschnittsweise in einer Druckkammer angeordnet. Weiterhin wird ein Verschlussteil in Form einer Stahlkugel zum gasdichten Verschließen der Öffnung in der Druckkammer bereitgestellt. Nach einem Einleiten von Gas in die Druckkammer derart, dass das Gas über die Öffnung in das Gehäuse gelangt, wird die Öffnung des Gehäuses gasdicht verschlossen, indem die Stahlkugel in die Öffnung eingepresst wird. Ein solches Verfahren ist aus der DE 2457501 bekannt.

Bei dem herzustellenden Gasgenerator handelt es sich um einen Gasgenerator, bei dem zumindest ein Teil des freizusetzenden Gases in einem gasförmigen Zustand im Gasgenerator gespeichert ist. Insbesondere kann es sich bei einem derartigen Gasgenerator um einen so genannten Kaltgasgenerator handeln, bei dem die gesamte freisetzbare Gasmenge in einem geeigneten Behälter im gasförmigen Zustand gespeichert ist oder um einen so genannten Hybridgasgenerator, bei dem Gas sowohl im gasförmigen Zustand gespeichert ist als auch in Form eines Brennstoffes, der erst beim Verbrennen Gase zum Aufblasen eines Gassackes freisetzt.

Nachteilig an dem eingangs beschriebenen Verfahren ist, dass in das Gehäuse des Gasgenerators eine Öffnung eingebracht werden muss, die - ebenso wie die in die Öffnung einzupressende Stahlkugel - eng toleriert sein muss, um eine gasdichte Abdichtung der Öffnung mittels der Stahlkugel gewährleisten zu können. Dieser Arbeitsschritt ist aufwändig und daher kostenintensiv.

In der EP 0 802 090 A1 wird ein Verfahren und eine Vorrichtung zur Herstellung eines Gasgenerators beschrieben, bei dem ein zylindrischer Grundkörper an einem Ende eine Öffnung aufweist, über die dieser mit Gas befüllbar ist. Die Öffnung wird nach dem Befüllen mit einem Verschlussteil überdeckt und das Verschlussteil wird mittels Widerstandsschweißen mit dem zylindrischer Grundkörper verbunden, so dass der Gasgenerator somit gasdicht verschlossen wird.

Der Erfindung liegt das Problem zugrunde ein Verfahren zur Herstellung eines Gasgenerators sowie eine Vorrichtung zur Durchführung des Verfahrens bereitzustellen derart, dass ein einfaches und kostengünstiges Abdichten der Öffnung möglich ist.

Dieses Problem wird durch ein Verfahren mit den Merkmalen des Anspruchs 1 und eine Vorrichtung zur Durchführung des Verfahrens mit den Merkmalen des nebengeordneten Anspruchs 12 gelöst.

Da die zum Befüllen des Gehäuses mit Gas vorgesehene Öffnung des Gehäuses mittels eines die Öffnung überdeckenden Verschlussteiles verschlossen wird, ist der Arbeitsschritt des Vorsehens einer exakt auf einen Verschluss in Form einer Stahlkugel angepassten Öffnung des Gehäuses mit Vorteil verzichtbar. Das das Verschlussteil die Öffnung überdeckt, bedeutet dabei (wie auch im Folgenden), dass das Verschlussteil die Öffnung außerhalb der Öffnung überragt. D.h., zum Überdecken der Öffnung weist das Verschlussteil in einer parallel zur Ebene der Öffnung verlaufenden Querschnittsebene eine Querschnittsfläche auf, die größer ist als die Querschnittsfläche der Öffnung. Dabei muss das Verschlussteil nicht notwendigerweise auf einem die Öffnung berandenden Randbereich flächig aufliegen.

Bevorzugt wird das Verschlussteil durch einen Gehäuseboden des Gehäuses gebildet, wobei das Gehäuse vorzugsweise die Form eines einseitig offenen Hohlzylinders aufweist. Das Verschlussteil weist hierbei bevorzugt die Form eines Zylinderbodens auf, der dazu ausgebildet ist, die Öffnung in Form einer offenen Stirnseite des zylinderförmigen Gehäuses zu überdecken.

Das erfindungsgemäße Verfahren erlaubt somit im Vorfeld des Befüllens des Gehäuses mit Gas die vorteilhafte Einsparung eines kompletten Arbeitsganges, nämlich das Ausbilden einer Schweißverbindung zwischen dem Gehäuse und dem Verschlussteil sowie die anschließende Ausbildung der durch die Stahlkugel zu verschließenden Öffnung am Gehäuse.

Allgemein wird unter einer Öffnung des Gehäuses in Form einer offenen Deckfläche eine Öffnung verstanden, die durch das Fehlen einer Gehäuseseite des betreffenden Gehäuses gebildet wird. Bei einer derartigen Gehäuseseite kann es sich beispielsweise um einen Gehäuseboden des Gehäuses handeln.

Vorzugsweise wird bei dem erfindungsgemäßen Verfahren das Verschlussteil zum gasdichten Verschließen der Öffnung (offene Deckfläche) mittels Widerstandsschweißen mit dem Gehäuse verbunden. Die beiden Gehäuseteile (Gehäuse und Verschlussteil) sind dementsprechend elektrisch leitfähig ausgebildet.

Durch den Ringspalt kann das in den Druckraum eingeleitete Gas in das Gehäuse strömen. Je nach Position des Verschlussteiles kann der Spalt unterschiedlich groß ausgebildet werden, so dass bei entsprechend großem Spalt die Füllzeiten vorteilhaft kurz sind.

Beim Erreichen einer vordefinierbaren Gasfüllmenge im Gehäuse während des Einleitens von Gas in den Druckraum, wird das Verschlussteil entlang einer ersten Richtung gegen einen die Öffnung (außerhalb der Öffnung) berandenden Rand des Gehäuses gedrückt.

Vorzugsweise wird das Verschlussteil mittels der ersten Elektrode entlang der ersten Richtung gegen den Rand des Gehäuses gedrückt, so dass eine leitfähige Verbindung zwischen dem Verschlussteil und dem Gehäuse hergestellt wird. Hierzu sind die beiden Gehäuseteile (Gehäuse und Verschlussteil) elektrisch leitfähig ausgebildet.

Eine Variante der Erfindung sieht vor, das Gehäuse vor dem Ausbilden des Ringspaltes, über den das Gehäuse mit Gas befüllt wird, in der Druckkammer zu zentrieren. Hierzu fährt die erste Elektrode mit dem Verschlussteil entlang der ersten Richtung nach unten und drückt das Verschlussteil in die Öffnung des Gehäuses. Hierbei wird das Gehäuse bezüglich des Verschlussteils ausgerichtet, d.h., zentriert.

Alternativ hierzu wird das Verschlussteil in einer quer zur ersten Richtung verlaufenden Ebene in der Öffnung zentriert, indem das Gehäuse bezüglich der Druckkammer festgelegt wird und das Verschlussteil gegen den Rand des Gehäuses gedrückt wird, wobei sich das Verschlussteil quer zur ersten Richtung in der Öffnung ausrichtet. Hierzu weist das Verschlussteil an einem dem Gehäuse (bzw. der Öffnung) zugewandten Rand bevorzugt eine Fase auf.

Damit die beiden Gehäuseteile mittels Widerstandsschweißen miteinander verbunden werden können, wird das Gehäuse im Druckraum vor dem Einleiten von Gas in den Druckraum mit einer zweiten, ebenfalls zum Widerstandsschweißen ausgebildeten Elektrode verbunden. Diese bildet dabei ein Widerlager für das Gehäuse, d.h., durch Anwenden eines Druckes entlang der ersten Richtung auf das Verschlussteil mittels der ersten Elektrode wird das Verschlussteil gegen das Gehäuse gedrückt und das Gehäuse infolgedessen gegen die zweite Elektrode.

Alternativ hierzu ist vorgesehen, dass das Gehäuse mittels einer verschieblich an der Druckkammer gelagerten zweiten Elektrode quer zur ersten Richtung in der Druckkammer festgelegt wird. In diesem Fall wird zunächst das Gehäuse in der Druckkammer wie vorstehend beschrieben zentriert und sodann das Gehäuse mittels der zweiten Elektrode eingespannt, so dass es zumindest quer zur ersten Richtung festgelegt ist. Hierbei kann die zweite Elektrode beidseitig quer zur ersten Richtung gegen das Gehäuse drücken oder dieses im Querschnitt eng umgreifen. Hiernach wird das Verschlussteil mittels der ersten Elektrode vom Gehäuse abgehoben, so dass ein Ringspalt ausgebildet wird, über den das Gehäuse mit Gas befüllt werden kann.

Nach dem Befüllen wird das Verschlussteil mittels der Elektrode gegen den Rand der Öffnung des Gehäuses gedrückt und mittels Widerstandschweißen mit dem Gehäuse verbunden.

Zum Verbinden der beiden Gehäuseteile durch Widerstandsschweißen wird eine Spannung zwischen den beiden Elektroden bereitgestellt derart, dass ein hinreichender (über den Rand fließender) Strom zwischen dem Gehäuse und dem Verschlussteil erzeugt wird, der zur Ausbildung einer gasdichten Widerstandsschweißverbindung zwischen den beiden Gehäuseteilen führt.

Bevorzugt wird das Gas mit einem Druck von größer oder gleich 600 bar in die Druckkammer eingeleitet.

Des Weiteren wird das erfindungsgemäße Problem durch eine Vorrichtung zur Herstellung eines Gasgenerators mit den Merkmalen des nebengeordneten Anspruchs 12 gelöst. Eine derartige Vorrichtung weist eine mit Gas befüllbare Druckkammer auf, die dazu eingerichtet und vorgesehen ist, ein durch eine Öffnung mit Gas befüllbares Gehäuse des Gasgenerators gasdicht zu umschließen derart, dass in die Druckkammer eingeleitetes Gas durch die Öffnung hindurch in das Gehäuse gelangen kann. Weiterhin weist eine derartige Vorrichtung ein entlang einer ersten Richtung aus einer ersten in eine zweite Position verschiebbares Element auf, das dazu eingerichtet und vorgesehen ist, in der zweiten Position ein in der Druckkammer angeordnetes Verschlussteil des Gasgenerators zum Verschließen der Öffnung entlang der ersten Richtung gegen das mit Gas befüllte Gehäuse zu drücken. Das verschiebbare Element ist dabei als eine erste Elektrode ausgebildet, die in der zweiten Position elektrisch leitend mit dem Verschlussteil verbunden ist. Zum Verbinden der beiden Gehäuseteile durch Widerstandsschweißen ist eine zweite, zumindest teilweise in der Druckkammer angeordnete Elektrode vorgesehen ist, die dazu ausgebildet ist, mit dem Gehäuse des Gasgenerators elektrisch leitend verbunden zu sein. Das verschiebbare Element ist dazu eingerichtet und vorgesehen, das durch einen Gehäuseboden des Gehäuses gebildete Verschlussteil in der zweiten Position derart gegen das Gehäuse zu drücken, dass das Verschlussteil die durch den fehlenden Gehäuseboden gebildete Öffnung außerhalb des Gehäuses überdeckt. Nach einer ersten Alternative der Erfindung weist die zweite Elektrode einen Körper mit einer Ausnehmung auf, der zur Aufnahme eines Endabschnittes des Gehäuses des Gasgenerators ausgebildet ist, wobei der Körper von einem Boden der Druckkammer in die Druckkammer hinein absteht. Nach einer zweiten Alternative der Erfindung ist die zweite Elektrode längsverschieblich an einer Wandung der Druckkammer gelagert.

Bei der Öffnung des Gehäuses handelt es sich also wiederum um eine offene Deckfläche des Gehäuses, wobei das Verschlussteil die Deckfläche ausbildet.

Zum Überdecken der in die erste Richtung weisenden Öffnung weist das Verschlussteil in einer quer zur ersten Richtung verlaufenden Querschnittsebene eine Querschnittsfläche auf, die größer ist als eine größte Querschnittsfläche der Öffnung entlang einer quer zur ersten Richtung verlaufenden Querschnittsebene.

Bevorzugt ist das verschiebbare Element dazu eingerichtet und vorgesehen, in der zweiten Position das Verschlussteil gegen einen die Öffnung (außerhalb der Öffnung) berandenden Rand zu drücken, um bei elektrisch leitfähigen Gehäuseteilen (Gehäuse und Verschlussteil) eine elektrisch leitfähige Verbindung zwischen den beiden Gehäuseteilen zu bewirken.

Nach der ersten Variante der Erfindung ist die Aufnahme ist dabei derart bemessen, dass der Endabschnitt des Gehäuses beim Anordnen in der Aufnahme mit dem Körper verspannt wird. Hierbei umgreift der Körper den Endabschnitt des Gehäuses im Querschnitt, so dass das Gehäuse des Gasgenerators nach dem Anordnen in der Ausnehmung des Körpers fest und unbeweglich in den Körper eingespannt ist.

Zum Ausbilden einer elektrischen Verbindung mit dem Körper der zweiten Elektrode weist die Druckkammer einen elektrisch leitfähigen Boden auf, insbesondere aus Kupfer.

Bevorzugt umfasst die zweite Elektrode gemäß der zweiten Alternative der Erfindung dabei mindestens einen ersten Schieber, der quer zur ersten Richtung in einer gegenüber der Wandung isolierten und abgedichteten Aussparung der Druckkammer zwischen einer ersten und einer zweiten Position hin und her verschiebbar gelagert ist. Vorzugsweise ist der erste Schieber dazu ausgebildet, in der ersten Position mit einem verjüngten Anlageende quer zur ersten Richtung von einem die Öffnung umlaufenden Mantelbereich des Gehäuses beabstandet zu sein und in einer zweiten Position mit dem Anlageende quer zur ersten Richtung gegen den Mantelbereich gedrückt zu werden, so dass eine elektrisch leitfähige Verbindung zwischen dem Anlageende und dem Mantelbereich hergestellt ist. Vorteilhaft hieran ist, dass sich der Mantelbereich in unmittelbarer Nähe zum Rand der Öffnung des Gehäuses befindet, so dass beide Elektroden unmittelbar im Bereich der herzustellenden Verbindung zwischen dem Verschlussteil und dem Gehäuse wirksam werden können.

Bevorzugt weist die zweite Elektrode einen weiteren, zweiten Schieber auf, der quer zur ersten Richtung in einer zweiten Aussparung der Druckkammer zwischen einer ersten und einer zweiten Position hin und her verschiebbar gelagert ist, wobei sich die beiden Schieber bevorzugt einander gegenüberliegen, so dass sie beim Verlagern aus der jeweiligen ersten Position in ihre jeweilige zweite Position aufeinander zu bewegt werden.

Somit kann das Gehäuse innerhalb der Druckkammer zwischen den (einander zugewandten) Anlageenden der beiden Schieber eingespannt werden. Vorzugsweise sind die Anlageenden dergestalt ausgebildet, dass sie in der jeweiligen zweiten Position der Schieber formschlüssig am Mantelbereich des Gehäuses anliegen.

Somit wird durch die beiden - in der zweiten Position befindlichen - Schieber ein mechanisches Gegenlager für das Gehäuse gebildet, welches ein Aufweiten des Gehäuses während des Widerstandsschweißvorganges verhindert.

Vorzugsweise weist die Druckkammer eine vom Boden abstehende Wandung auf, insbesondere aus einem Stahl, die über einen elektrischen Isolator mit dem Boden verbunden ist, so dass kein Strom über die Wandung der Druckkammer fließen kann.

Bevorzugt weist die Druckkammer eine elektrisch isolierende Decke auf, insbesondere aus Pertinax, die dem Boden der Druckkammer entlang der ersten Richtung gegenüber liegt und gasdicht mit der Wandung der Druckkammer verbunden ist.

Die Decke der Druckkammer weist vorzugsweise eine durchgängige Ausnehmung auf, durch die hindurch das verschiebbare Element in die Druckkammer geführt ist.

Zum Abdichten dieser Ausnehmung ist eine ringförmige Dichtung, insbesondere aus PTFE, vorgesehen. Bevorzugt ist der Dichtring in einer Nut angeordnet, die an einer dem verschiebbaren Element zugewandten Innenseite der Ausnehmung umläuft, so dass die ringförmige Dichtung das verschiebbare Element im Querschnitt umgreift und abdichtend an diesem anliegt. Für den Fall, dass eine zweite Elektrode in Form zweier Schieber vorgesehen ist, werden derartige Dichtungen bevorzugt auch zum Abdichten der beiden Aussparungen verwendet, in denen die beiden Schieber an der Wandung der Druckkammer gelagert sind.

Ein mit dem erfindungsgemäßen Verfahren hergestellter Gasgenerator weist ein Gehäuse auf, mit einer Öffnung, die dazu eingerichtet und vorgesehen ist, bei der Herstellung des Gasgenerators als Gaseinfüllöffnung zu dienen, sowie ein Verschlussteil für die Öffnung, das zusammen mit dem Gehäuse des Gasgenerators einen gasdichten Speicher zum Speichern des zum Aufblasen eines Airbags zu verwendenden Gases bildet.

Dabei ist vorgesehen, dass die Öffnung durch eine offene Deckfläche des Gehäuses gebildet ist, wobei unter einer Öffnung des Gehäuses in Form einer offenen Deckfläche eine Öffnung verstanden wird, die durch das Fehlen einer Gehäuseseite des betreffenden Gehäuses gebildet wird, und dass das als der Gehäuseboden (Deckfläche) ausgebildete Verschlussteil die Öffnung außerhalb des Gehäuses überdeckt.

Der Gasgenerator ist einfach und kostengünstig aufgebaut und erlaubt ein einfaches Befüllen des Gehäuses des Gasgenerators mit Gas und ein einfaches anschließendes Verschließen der zum Befüllen verwendeten Öffnung des Gehäuses.

Bevorzugt weist die Öffnung des Gehäuses in eine erste Richtung, wobei eine Querschnittsfläche des Verschlussteiles entlang einer quer zur ersten Richtung orientierten Querschnittsebene größer ist als eine größte Querschnittsfläche der Öffnung entlang einer quer zur ersten Richtung orientierte Querschnittsebene. Hierdurch kann das Verschlussteil zum Verbinden der beiden Gehäuseteile (Gehäuse und Verschlussteil) vorteilhaft einfach gegen einen die Öffnung berandenden Rand des Gehäuses gedrückt werden.

Bevorzugt sind das Gehäuse und das Verschlussteil mittels einer Schweißverbindung miteinander verbunden, die vorzugsweise mittels eines Widerstandsschweißverfahrens ausgebildet wird. Das Widerstandsschweißverfahren wird durch die Anordnung der beiden Gehäuseteile zueinander - das Verschlussteil überdeckt die Öffnung des Gehäuses - vorteilhaft begünstigt.

In einer Variante weist das Verschlussteil an einem dem Gehäuse zugewandten Rand einer Fase auf, die eine Anlagefläche für das Gehäuse ausbildet. Dies erlaubt ein Zentrieren des Verschlussteiles bezüglich der Öffnung des Gehäuses, wenn das Verschlussteil beim Verbinden der beiden Gehäuseteile gegen das Gehäuse gedrückt wird.

Wesentlich ist, dass die Öffnung des Gehäuses jeweils in Form einer offenen Deckfläche des Gehäuses vorliegt. Das Verschlussteil bildet dabei die Deckfläche des Gehäuses. Besonders bevorzugt ist das Verschlussteil durch einen Gehäuseboden des Gehäuses des Gasgenerators gebildet, wobei der Gehäuseboden eine Öffnung des Gehäuses in Form einer offenen Deckfläche überdeckt. Bevorzugt ist das Gehäuse zylinderförmig ausgebildet, wobei der Gehäuseboden quer zur Zylinderachse über die Öffnung (offene Stirnseite des zylinderförmigen Gehäuses) hinaus steht.

Weitere Einzelheiten und Vorteile der Erfindung werden bei der nachfolgenden Beschreibung von Ausführungsbeispielen anhand der Figur deutlich werden.

Es zeigt:
- Fig. 1: eine schematische Querschnittsansicht einer Vorrichtung für die Herstellung eines Gasgenerators sowie einen in der Vorrichtung angeordneten Gasgenerator.
- Fig. 2: eine schematische Querschnittsansicht einer Abwandlung der in der Figur 1 gezeigten Vorrichtung.

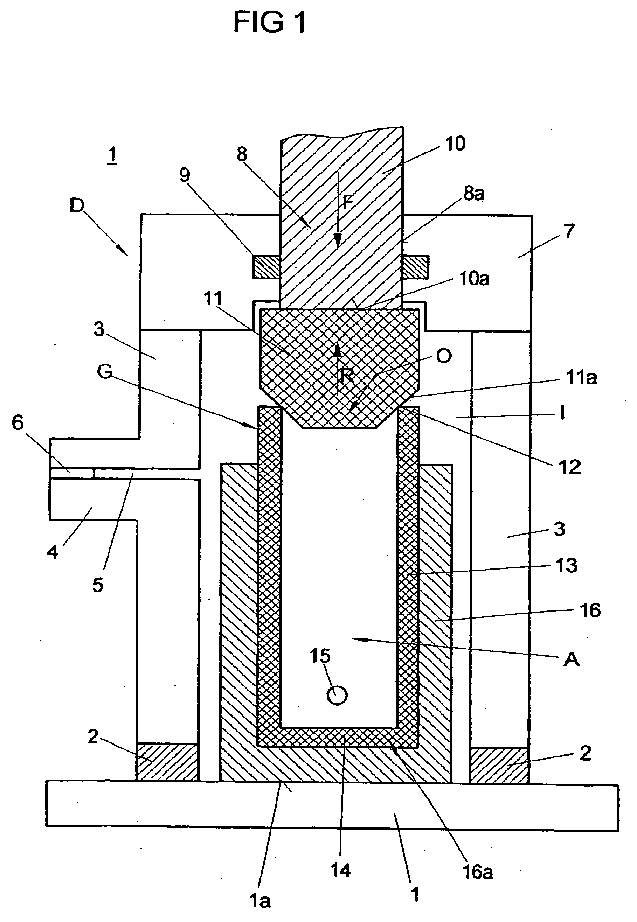

Fig. 1 zeigt eine schematische Schnittansicht einer Vorrichtung 1 zur Herstellung eines Gasgenerators G, mit einem Druckraum D, der einen Innenraum I des Druckraumes D umgibt, in dem der Gasgenerator G zum Befüllen mit Gas angeordnet ist.

Der Druckraum D weist einen flächigen Boden 1 auf, der aus Kupfer gefertigt ist. Von einer dem Innenraum I zugewandten Innenseite 1a des Bodens 1 steht eine Wandung 3 der Druckkammer D entlang einer ersten Richtung R ab, die über einen elektrischen Isolator 2 mit dem Boden 1 verbunden ist, so dass zwischen dem Boden 1 und der Wandung 3 kein Stromfluss zustande kommen kann.

Zum Einleiten von Gas in den Innenraum I der Druckkammer D weist die Wandung 3 einen Gaseinlass 5 auf, der mittels eines Ventils 6 gasdicht verschließbar ist. Zum Anschließen einer Gasleitung an den Gaseinlass 5 bzw. das Ventil 6 ist das Ventil 6 und der Gaseinlass 5 an einem entsprechend angepassten Vorsprung 4 der Wandung 3 ausgebildet.

Eine Decke 7 der Druckkammer D liegt dem Boden 1 entlang der ersten Richtung R gegenüber und ist geeignet an einer der Decke 7 zugewandten Stirnseite der Wandung 3 festgelegt.

Der im Innenraum I angeordnete Gasgenerator G umfasst ein Gehäuse 13, das eine mit Gas befüllbare Aufnahme A bildet. Hierzu ist das Gehäuse 13 als ein halboffener Hohlzylinder ausgebildet, mit einer in die erste Richtung R weisenden Öffnung O in Form einer offenen Deckfläche des Hohlzylinders, wobei die Öffnung O entlang der ersten Richtung R der Decke 7 der Druckkammer D zugewandt ist.

Das Gehäuse 13 des Gasgenerators G ist mit einem der Öffnung O (offene Stirnseite des Gehäuses 13) entlang der ersten Richtung R gegenüberliegenden Endabschnitt 14 entlang der ersten Richtung R in eine Ausnehmung 16a eines aus Kupfer bestehenden Körpers 16 eingeführt, so dass der Endabschnitt 14 des Gehäuses 13 die Ausnehmung des Körpers 16 vollständig ausfüllt. Hierbei ist die Ausnehmung 16a des Körpers 16 derart dimensioniert, dass das Gehäuse 13 des Gasgenerators G nach dem Einführen in die Ausnehmung 16a des Körpers 16 mit diesem verspannt ist. Der Körper 16 dient zum einen zum Fixieren des Gehäuses 13 im Innenraum I des Druckraumes D und zum anderen zum Herstellen einer elektrischen Verbindung zwischen dem Boden 1 und dem Gehäuse 13. Hierzu ist der Körper 16 aus Kupfer gefertigt und über die Innenseite 1a des Bodens 1 elektrisch leitend mit dem Boden 1 verbunden. Der Boden 1 und der Körper 16 bilden somit eine als zweite Elektrode bezeichnete Elektrode, die mittels des elektrischen Isolators 2 gegenüber der Wandung 3 (Stahl) elektrisch isoliert ist. Da das (elektrisch) leitfähige Gehäuse 13 mit dem Körper 16 der zweiten Elektrode verspannt ist, besteht eine elektrische leitende Verbindung zwischen der zweiten Elektrode und dem Gehäuse 13.

Zum Verschließen der Öffnung O des Gehäuses 13 nach einem Befüllen des Gehäuses 13 mit Gas, ist ein Verschlussteil 11 in Form eines zylinderförmigen Endstückes (Gehäuseboden) vorgesehen, das dazu ausgebildet ist, die Öffnung O im verschlossenen Zustand zu überdecken. Dabei weist das Verschlussteil 11 an einem dem Gehäuse 13 zugewandten Rand eine Fase 11a auf, so dass sich der Querschnitt des Verschlussteiles entlang (entgegen) der ersten Richtung R verringert, wodurch das Verschlussteil 11 zumindest abschnittsweise entlang der ersten Richtung R durch die Öffnung O in die Aufnahme A des Gehäuses13 eingeführt werden kann.

Zum Befüllen des Gehäuses 13 mit Gas, ist das Verschlussteil 11 derart bezüglich der Öffnung O angeordnet, dass zwischen einem die Öffnung O begrenzenden Rand 12, der die Öffnung O ringförmig umläuft und der Fase 11a, die eine Anlagefläche für diesen Rand 12 bildet, ein Ringspalt ausgebildet ist. Durch diesen Ringspalt gelangt Gas, das mit etwa 600 bar durch den Gaseinlass 5 in den Innenraum I der Druckkammer D eingeleitet wird, in das Gehäuse 13 des Gasgenerators G. Nach dem Erreichen einer vordefinierbaren Gasfüllmenge im Gehäuse 13 wird die Gaszufuhr gestoppt und das Verschlussteil 11 entlang der ersten Richtung R mit seiner Anlagefläche 11a gegen den Rand 12 des Gehäuses 13 gedrückt. Hierzu ist ein entlang der ersten Richtung R verschiebbares und längs erstrecktes Element 10 vorgesehen, das durch eine durchgängige Ausnehmung 8 der Decke 7 in den Innenraum I der Druckkammer D geführt ist. Das verschiebbare Element 10 ist zwischen einer ersten und einer zweiten Position verschiebbar ausgebildet, wobei die dem verschiebbaren Element 10 zugewandten Innenseite 8a der durchgängigen Ausnehmung 8 als eine Lagerfläche des verschiebbaren Elementes 10 dient.

Das verschiebbare Element 10 wirkt derart mit dem Verschlussteil 11 zusammen, dass in der ersten Position des verschiebbaren Elementes 10 der zum Füllen des Gehäuses 13 vorgesehene Ringspalt zwischen dem Verschlussteil 11 und dem Gehäuse 13 ausgebildet ist, und dass in der zweiten Position des verschiebbaren Elementes 10 das verschiebbare Element 10 das Verschlussteil 11 entlang der ersten Richtung R mit einer Kraft F gegen den Rand 12 des Gehäuses 13 drückt. Hierzu kann das verschiebbare Element 10 mit einer dem Verschlussteil 11 zugewandten Innenseite 10a an dem Verschlussteil 11 festgelegt sein. Eine derartige feste Verbindung zwischen dem verschiebbaren Element 10 und dem Verschlussteil 11 ist allerdings nicht zwingend notwendig. Zum Abdichten der durchgängigen Ausnehmung 8 der Decke 7 ist an der Innenseite 8a eine das verschiebbare Element 10 umlaufende Nut vorgesehen, in der ein Dichtungsring 9, vorzugsweise aus PTFTE, angeordnet ist, der das verschiebbare Element 10 abdichtend umgreift.

Das verschiebbare Element 10 ist als eine erste Elektrode ausgebildet, die in der zweiten Position, in der sie entlang der ersten Richtung R gegen das Verschlussteil 11 drückt, elektrisch leitend mit dem elektrisch leitfähigen Verschlussteil 11 verbunden ist. Beim Anlegen einer Spannung zwischen der ersten und der zweiten Elektrode 10, 1, 16 kann somit ein Strom zwischen dem Gehäuse 13 und dem Verschlussteil 11 über den Rand 12 fließen, der zwischen dem Verschlussteil 11 und dem Gehäuse 13 eine gasdichte Widerstandsschweißverbindung erzeugt.

Zum Anordnen bzw. zum Entnehmen des Gasgenerators G aus dem Innenraum I des Druckraumes D ist beispielsweise die Decke 7 lösbar mit der Wandung 3 des Druckraumes D (gasdicht) verbunden. Hierzu ist vorzugsweise entlang der ersten Richtung R zwischen der Stirnseite der Wandung 3 und der Decke 7 ein Dichtring angeordnet, der beim Vorspannen der Decke 7 gegen die Stirnseite der Wandung 3, beispielsweise durch eine Schraubverbindung, eine gasdichte Verbindung zwischen der Wandung 3 und der Decke 7 gewährleistet.

Zum Ausströmen des im Gehäuses 13 gespeicherten Gases des Gasgenerators G ist am Gehäuse 13 des Gasgenerators G eine Ausströmöffnung 15 vorgesehen, die beispielsweise mittels einer Zündeinrichtung öffenbar ist, so dass das in dem Gehäuse 13 des Gasgenerators G gespeicherte Gas freigesetzt werden kann.

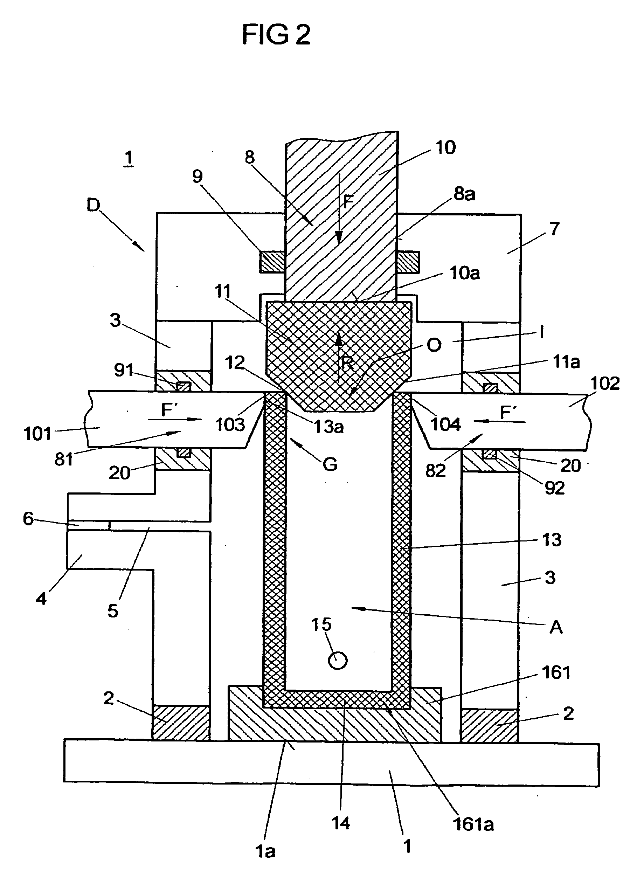

Figur 2 zeigt eine schematische Schnittansicht einer Vorrichtung 1 zur Herstellung eines Gasgenerators G, bei der im Unterschied zu der in der Figur 1 gezeigten Vorrichtung keine zweite Elektrode in Form des Körpers 16 vorgesehen ist, sondern eine zweite, durch zwei Schieber 101, 102 gebildete Elektrode.

Die beiden Schieber 101, 102 sind dabei entlang der ersten Richtung R etwa auf Höhe des Randes 12 des Gehäuses 13 an der Wandung 3 der Druckkammer D gelagert. Hierzu sind die beiden Schieber 101, 102 jeweils längsverschieblich in durchgängigen Aussparungen 81, 82 der Wandung 3 zu beiden Seiten des Gehäuses 13 angeordnet, so dass sie quer zur ersten Richtung R aus einer ersten Position in einer zweite Position (aufeinander zu) bewegbar sind, wobei die beiden Schieber 101, 102 in der zweiten Position jeweils mit einem Anlageende 103, 104 mit der Kraft F' fest gegen einen die Öffnung O des Gehäuses 13 umlaufenden Mantelbereich 13a des Gehäuses 13 drücken, so dass dieses fest zwischen den Schiebern 101, 102 eingespannt ist und eine elektrisch leitfähige Verbindung zwischen den Schiebern 101, 102 und dem Mantelbereich 13a resultiert.

Am Boden 1 der Duckkammer D ist des Weiteren ein Körper 161 vorgesehen, mit einer Ausnehmung 161a, in der das Gehäuse 13 mit seinem Endabschnitt 14 anordenbar ist, um es zusätzlich in der Druckkammer D zu fixieren. Ein derartiger Körper 161 ist allerdings nicht zwingend notwendig.

Mit der ersten Elektrode 10 wird vorliegend das Verschlussteil 11 nach dem Befüllen des Gehäuses 13 mit Gas - entsprechend dem in der Figur 1 dargestellten Ausführungsbeispiel - gegen den Rand 12 gedrückt, der sich in unmittelbarer Nähe zum Mantelbereich 13a befindet, d.h., der Abstand zwischen dem Rand 12 und dem Mantelbereich 13a quer zur ersten Richtung R entspricht der Materialstärke des Gehäuses 13. Aufgrund dieses geringen Abstands lassen sich die beiden Gehäuseteile 11,13 effizient mittels der beiden Elektroden 10, 101, 102 verschweißen.

Hierzu wird zwischen den beiden Elektroden 10, 101, 102, d.h., zwischen dem verschiebbaren Element 10 und den beiden Schiebern 101, 102 eine Spannung angelegt. Diese erzeugt einen die beiden Gehäuseteile 11, 13 miteinander verschweißenden Stromfluss über die kürzeste Verbindung zwischen der ersten und der zweiten Elektrode 10, 101, 102, die vorliegend von der ersten Elektrode 10 über das Verschlussteil 11, den Rand 12 und den Mantelbereich 13a zu den Anlageenden 103, 104 der beiden Schieber 101, 102 verläuft.

Die Schieber 101, 102 führen beim Widerstandschweißen Strom und sind daher gegenüber der Wandung 3 mittels Isolatoren 20, die die Schieber 101, 102 jeweils im Querschnitt umgreifen, isoliert. Die beiden Isolatoren 20 weisen jeweils eine Nut auf, in der ein den jeweiligen Schieber 101, 102 umgreifender Dichtring 91, 92 umläuft, der zum Abdichten der jeweiligen Aussparung 81, 82 dient.

Im Einzelnen werden zum Befüllen des Gehäuses 13 mit Gas die folgenden Schritte durchlaufen: Zunächst wird das Gehäuse 13 in die Druckkammer D eingeführt. Die erste Elektrode 10 fährt entlang der ersten Richtung R nach unten und drückt das Verschlussteil 11 gegen das Gehäuse 13, so dass dieses zentriert wird. Mittels der beiden Schieber 101, 102 (waagerechte Elektrode) wird das Gehäuse 13 im Bereich seiner Öffnung O eingespannt und die erste Elektrode 10 fährt nach oben, so dass das Verschlussteil 11 einen Ringspalt zwischen dem Rand 12 des Gehäuses 13 und dem Verschlussteil 11 freigibt, durch den das Gehäuse 14 befüllt wird. Hiernach fährt die erste Elektrode 10 wieder entlang der ersten Richtung R nach unten und drückt das Verschlussteil mit einer Kraft F gegen den Rand 12 der Öffnung O des Gehäuses 13. Zum Verbinden von Verschlussteil 11 und Gehäuse 13 wird nun ein Schweißstrom erzeugt, und zwar durch Anlegen einer Spannung zwischen den beiden Elektroden 10, 101, 102, der die beiden Gehäuseteile miteinander verschweißt. Anschließend wird die Druckkammer D geöffnet und das Gehäuse 13 entnommen.

## Patentansprüche

1. Verfahren zur Herstellung eines Gasgenerators, der zum Einbau in eine Airbagvorrichtung für ein Kraftfahrzeug eingerichtet und vorgesehen ist, umfassend die folgenden Schritte:
- Bereitstellen eines Gehäuses (13) des Gasgenerators (G) in einer Druckkammer (D), wobei das Gehäuse (13) eine durch einen fehlenden Gehäuseboden des Gehäuses (13) gebildete Öffnung (O) aufweist, über die das Gehäuse (13) mit Gas befüllbar ist,
- Bereitstellen eines durch den Gehäuseboden gebildeten Verschlussteiles (11) in der Druckkammer (D) zum gasdichten Verschließen der Öffnung (O),
- Festlegen des Gehäuses (13) quer zu einer ersten Richtung (R) in der Druckkammer (D),
- Ausbildung eines Ringspalts zwischen dem Verschlussteil (11) und dem Rand (12) des Gehäuses, indem das Verschlussteil (11) entlang der ersten Richtung (R) mittels der ersten Elektrode (10) vom Gehäuse (13) beabstandet wird,
- Einleiten von Gas in die Druckkammer (D), so dass Gas über die Öffnung (O) in das Gehäuse (13) gelangt, und
- Verbinden des Verschlussteiles (11) mit dem Gehäuse (13) zum gasdichten Verschließen der Öffnung (O) derart, dass das Verschlussteil (11) die Öffnung (O) im verschlossenen Zustand überdeckt,
wobei das Gehäuse (13) vor dem Ausbilden des Ringspaltes durch Drücken des Verschlussteiles (11) entlang der ersten Richtung (R) gegen den Rand (12) des Gehäuses (13) quer zur ersten Richtung (R) bezüglich des Verschlussteiles (11) zentriert wird oder das Verschlussteil (11) nach dem Festlegen des Gehäuses (13) bezüglich der Druckkammer (D) in einer quer zur ersten Richtung (R) verlaufenden Ebene in der Öffnung (O) zentriert wird, indem das Verschlussteil (11) gegen den Rand (12) des Gehäuses (13) gedrückt wird und sich dabei quer zur ersten Richtung (R) in der Öffnung (O) ausrichtet.

2. Verfahren nach Anspruch 1, **dadurch gekennzeichnet, dass** das Verschlussteil (11) mittels Widerstandsschweißen mit dem Gehäuse (13) verbunden wird.

3. Verfahren nach einem der vorangegangenen Ansprüche, **dadurch gekennzeichnet, dass** das Verschlussteil (11) nach dem Befüllen des Gehäuses (13) mit Gas entlang der ersten Richtung (R) gegen einen die Öffnung (O) berandenden Rand (12) des Gehäuses (13) gedrückt wird.

4. Verfahren nach einem der vorhergehenden Ansprüche, **dadurch gekennzeichnet, dass** das Verschlussteil (11) mittels einer zum Widerstandsschweißen ausgebildeten ersten Elektrode (10) gegen den Rand (12) des Gehäuses (13) gedrückt wird.

5. Verfahren nach einem der Ansprüche 2 bis 4, **dadurch gekennzeichnet, dass** das Gehäuse (13) mittels einer zum Widerstandsschweißen ausgebildeten zweiten Elektrode (16; 101, 102) festgelegt wird.

6. Verfahren nach Anspruch 5, **dadurch gekennzeichnet, dass** das Gehäuse (13) zum Festlegen in eine Ausnehmung (16a) der zweiten Elektrode (16) eingeführt wird.

7. Verfahren nach Anspruch 5, **dadurch gekennzeichnet, dass** das Gehäuse (13) mittels einer beweglich an der Druckkammer (D) gelagerten zweiten Elektrode (101, 102) quer zur ersten Richtung (R) festgelegt wird.

8. Verfahren nach Anspruch 4 oder einem der Ansprüche 5 bis 7, soweit rückbezogen auf Anspruch 4, **dadurch gekennzeichnet, dass** das Verschlussteil (11) nach einem Befüllen des Gehäuses (13) mit Gas mittels der ersten Elektrode (10) derart gegen den Rand (12) des Gehäuses (13) gedrückt wird, dass eine elektrisch leitfähige Verbindung zwischen dem Gehäuse (13) und dem Verschlussteil (11) hergestellt wird.

9. Verfahren nach Anspruch 5 oder einem der Ansprüche 6 bis 8, soweit rückbezogen auf Anspruch 5, **dadurch gekennzeichnet, dass** eine elektrisch leitfähige Verbindung zwischen der zweiten Elektrode (16; 101, 102) und dem Gehäuse (13) hergestellt wird.

10. Verfahren nach Anspruch 8 und 9, **dadurch gekennzeichnet, dass** zum Verbinden des Gehäuses (13) mit dem Verschlussteil (11) mittels Widerstandsschweißen eine Spannung zwischen den beiden Elektroden (10, 16; 101, 102) bereitgestellt wird, die einen Stromfluss zwischen dem Gehäuse (13) und dem Verschlussteil (11) über den Rand (12) des Gehäuses (13) bewirkt.

11. Verfahren nach einem der vorangegangenen Ansprüche, **dadurch gekennzeichnet, dass** der Gasdruck in der Druckkammer (D) beim Einleiten des Gases substantiell größer ist als der Druck der die Druckkammer (D) umgebenden Atmosphäre, insbesondere größer oder gleich 600 bar.

12. Vorrichtung zur Herstellung eines Gasgenerators für eine Airbagvorrichtung für ein Kraftfahrzeug, mit:
- einer mit Gas befüllbaren Druckkammer (D), die dazu eingerichtet und vorgesehen ist, ein Gehäuse (13) des Gasgenerators (G) aufzunehmen, das über eine Öffnung (O) des Gehäuses (13) mit Gas befüllbar ist, so dass in die Druckkammer (D) eingeleitetes Gas durch die Öffnung (O) in das Gehäuse (13) gelangen kann, und
- einem entlang einer ersten Richtung (R) aus einer ersten in eine zweite Positionen verschiebbaren Element (10), das dazu ausgebildet ist, in seiner zweiten Position ein in der Druckkammer (D) angeordnetes Verschlussteil (11) des Gasgenerators (G) zum Verschließen der Öffnung (O) entlang der ersten Richtung (R) gegen das mit Gas befüllte Gehäuse (13) zu drücken, wobei das Element (10) eine erste Elektrode umfasst, die dazu ausgebildet ist, in der zweiten Position elektrisch leitend mit dem Verschlussteil (11) verbunden zu sein,
- einer zweiten, zumindest teilweise in der Druckkammer (D) angeordneten Elektrode (1, 16; 101, 102), die dazu ausgebildet ist, mit dem Gehäuse (13) elektrisch leitend verbunden zu sein,
wobei das Element (10) dazu eingerichtet und vorgesehen ist, das durch einen Gehäuseboden des Gehäuses (13) gebildete Verschlussteil (11) in der zweiten Position derart gegen das Gehäuse (13) zu drücken, dass das Verschlussteil (11) die durch den fehlenden Gehäuseboden (11) gebildete Öffnung (O) außerhalb des Gehäuses (13) überdeckt.
**dadurch gekennzeichnet,**
**dass** die zweite Elektrode einen Körper (16) mit einer Ausnehmung (16a) aufweist, der zur Aufnahme eines Endabschnittes (14) des Gehäuses (13) ausgebildet ist, wobei der Körper (16) von einem Boden (1) der Druckkammer (D) in die Druckkammer (D) absteht; oder dass die zweite Elektrode (101, 102) verschieblich an der Druckkammer (D) gelagert ist.

13. Vorrichtung nach Anspruch 12, **dadurch gekennzeichnet, dass** das Element (10) dazu eingerichtet und vorgesehen ist, in der zweiten Position das Verschlussteil (11) gegen einen die Öffnung (O) außerhalb der Öffnung (O) berandenen Rand (12) des Gehäuses (13) zu drücken, um bei elektrisch leitfähigen Gehäuseteilen (13, 11) eine elektrisch leitfähige Verbindung zwischen dem Gehäuse (13) und dem Verschlussteil (11) zu bewirken.

14. Vorrichtung nach einem der Ansprüche 12 oder 13, **dadurch gekennzeichnet, dass** die Druckkammer (D) einen elektrisch leitfähigen Boden (1) aufweist, insbesondere aus Kupfer.

15. Vorrichtung nach Anspruch 12, **dadurch gekennzeichnet, dass** die zweite Elektrode mindestens einen ersten Schieber (101, 102) aufweist, der quer zur ersten Richtung (R) in einer Aussparung (81, 82) der Druckkammer (D) zwischen einer ersten und einer zweiten Position hin und her verschiebbar gelagert ist, wobei der mindestens eine erste Schieber (101, 102) dazu ausgebildet ist, in der ersten Position mit einem Anlageende (103, 104) quer zur ersten Richtung (R) von einem die Öffnung (O) umlaufenden Mantelbereich (13a) des Gehäuses (13) beabstandet zu sein und in der zweiten Position mit dem Anlageende (103, 104) quer zur ersten Richtung (R) gegen den Mantelbereich (13a) gedrückt zu werden, so dass eine elektrisch leitfähige Verbindung zwischen dem Anlageende (103, 104) und dem Mantelbereich (13a) hergestellt ist.

16. Vorrichtung nach Anspruch 15, **dadurch gekennzeichnet, dass** die zweite Elektrode einen weiteren, zweiten Schieber (102) aufweist, der quer zur ersten Richtung (R) in einer zweiten Aussparung (82) der Druckkammer (D) zwischen einer ersten und einer zweiten Position hin und her verschiebbar gelagert ist.

17. Vorrichtung nach Anspruch 15 und 16, **dadurch gekennzeichnet, dass** der zweite Schieber (102) dem ersten Schieber (101) quer zur ersten Richtung (R) gegenüberliegt.

18. Vorrichtung nach Anspruch 16 oder 17, **dadurch gekennzeichnet, dass** die beiden Schieber (101, 102) dazu ausgebildet sind, in ihrer jeweiligen zweiten Position derart gegen das Gehäuse (13) zu drücken, dass dieses quer zur ersten Richtung (R) zwischen den beiden Schiebern (101, 102) eingespannt ist.

19. Vorrichtung nach Anspruch 14 und einem der Ansprüche 15 bis 19 soweit rückbezogen auf Anspruch 14, **dadurch gekennzeichnet, dass** die Druckkammer (D) eine Wandung (3) aufweist, insbesondere aus einem Stahl, die über einen elektrischen Isolator (2) mit dem Boden (1) verbunden ist.

20. Vorrichtung nach Anspruch 14 und einem der Ansprüche 15 bis 19 soweit rückbezogen auf Anspruch 14, **dadurch gekennzeichnet, dass** die Druckkammer (D) eine elektrisch isolierende Decke (7), insbesondere aus Pertinax, aufweist, die dem Boden (1) entlang der ersten Richtung (R) gegenüberliegt.

21. Vorrichtung nach einem der Ansprüche 12 bis 20, **dadurch gekennzeichnet, dass** das verschiebbare Element (10) durch eine durchgängige Ausnehmung (8) der Druckkammer (D) in die Druckkammer (D) geführt ist.

22. Vorrichtung nach Anspruch 21, **dadurch gekennzeichnet, dass** die durchgängige Ausnehmung (8) mittels einer ringförmigen Dichtung (9), insbesondere aus PTFE, abgedichtet ist.

23. Vorrichtung nach Anspruch 21 oder 22, **dadurch gekennzeichnet, dass** die Ausnehmung (8) eine dem verschiebbaren Element (10) zugewandte Innenseite (8a) aufweist, mit einer die Ausnehmung (8) umlaufenden Nut, in der die ringförmige Dichtung (9) angeordnet ist.

## Claims

1. A method for producing a gas generator which is set up and provided for installation in an airbag device for a motor vehicle, comprising the following steps:
- providing a housing (13) of the gas generator (G) in a pressure chamber (D), the housing (13) having an opening (0) formed by the absence of a housing base (11) of the housing (13), through which opening (0) the housing (13) can be filled with gas,
- providing a closure part (11) formed by the housing base in the pressure chamber (D) for gas-tight closure of the opening (0),
- fixing the housing (13) in the pressure chamber (D) transversely to a first direction (R),
- forming an annular gap between the closure part (11) and the edge (12) of the housing (13), while the closure part (11) is spaced from the housing (13) in the first direction (R) by means of the first electrode (10),
- introducing gas into the pressure chamber (D) so that gas enters the housing (13) via the opening (0), and
- connecting the closure part (11) to the housing (13) for gas-tight closure of the opening (0) such that the closure part (11) covers the opening (0) in the closed state,
wherein, prior to the forming of the annular gap, the housing (13) is centered transversely to the first direction (R) with respect to the closure part (11) by pressing of the closure part (11) in the first direction (R) against the edge (12) of the housing (13), or, after the fixing of the housing (13), the closure part (11) is centered in the opening (O) with respect to the pressure chamber (D) in a plane oriented transversely with respect to the first direction (R) by means of the closure part (11) being pressed against the edge (12) of the housing (13) and thereby being aligned in the opening (0) transversely to the first direction (R).

2. The method as claimed in claim 1, **characterized in that** the closure part (11) is connected to the housing (13) by means of resistance welding.

3. The method as claimed in any one of the preceding claims, **characterized in that**, after the housing (13) has been filled with gas, the closure part (11) is pressed in the first direction (R) against an edge (12) of the housing (13) which borders the opening (O).

4. The method as claimed in any one of the preceding claims, **characterized in that** the closure part (11) is pressed against the edge (12) of the housing (13) by means of a first electrode (10) configured for resistance welding.

5. The method as claimed in any one of claims 2 to 4, **characterized in that** the housing (13) is fixed by means of a second electrode (16; 101, 102) configured for resistance welding.

6. The method as claimed in claim 5, **characterized in that** the housing (13) is introduced into a recess (16a) of a second electrode (16) for fixing of the housing (13).

7. The method as claimed in claim 5, **characterized in that** the housing (13) is fixed transversely to the first direction (R) by means of a second electrode (101, 102) mounted movably on the pressure chamber (D).

8. The method as claimed in claim 4 or in any one of claims 5 to 7 insofar as it relates to claim 4, **characterized in that**, after a filling of the housing (13) with gas, the closure part (11) is pressed by means of the first electrode (10) against the edge (12) of the housing (13) in such a manner that an electrically conductive connection is established between the housing (13) and the closure part (11).

9. The method as claimed in claim 5 or in any one of claims 6 to 8 insofar as it relates to claim 5, **characterized in that** an electrically conductive connection is established between the second electrode (16; 101, 102) and the housing (13).

10. The method as claimed in claims 8 and 9, **characterized in that**, for connecting the housing (13) to the closure part (11) by means of resistance welding, a voltage is provided between the two electrodes (10, 16; 101, 102) which effects a current flow between the housing (13) and the closure part (11) via the edge (12) of the housing (13).

11. The method as claimed in any one of the preceding claims, **characterized in that** the gas pressure in the pressure chamber (D), as the gas is introduced, is substantially greater than the pressure of the atmosphere surrounding the pressure chamber (D), in particular greater than or equal to 600 bar.

12. A device for producing a gas generator for an airbag device for a motor vehicle, comprising:
- a pressure chamber (D) which can be filled with gas and which is set up and provided to receive a housing (13) of the gas generator (G), which housing (13) can be filled with gas via an opening (O) of the housing (13), so that gas introduced into the pressure chamber (D) can enter the housing (13) through the opening (0), and
- an element (10) which is displaceable in a first direction (R) from a first to a second position and which is configured to press, in its second position, a closure part (11) of the gas generator (G) arranged in the pressure chamber (D) in the first direction (R) against the housing (13) filled with gas in order to close the opening (0), wherein the element (10) comprises a first electrode which is configured to be connected in an electrically conductive manner to the closure part (11) in the second position,
- a second electrode (1, 16; 101, 102) which is arranged at least partially in the pressure chamber (D) and which is configured to be connected in an electrically conductive manner to the housing (13),
wherein the element (10) is set up and provided to press the closure part (11) formed by a housing base of the housing (13) against the housing (13) in the second position in such a manner that the closure part (11) covers, outside the housing (13), the opening (O) formed by the absence of the housing base (11),
**characterized in that** the second electrode has a body (16) with a recess (16a) which is configured to receive an end portion (14) of the housing (13), wherein the body (16) sticks out from a base (1) of the pressure chamber (D) into the pressure chamber (D), or **in that** the second electrode (101, 102) is mounted displaceably on the pressure chamber (D).

13. The device as claimed in claim 12, **characterized in that** the element (10) is set up and provided to press the closure part (11) against an edge (12) of the housing (13) which borders the opening (0) outside the opening (0) in the second position, in order to effect an electrically conductive connection between the housing (13) and the closure part (11), in case the housing parts (13, 11) being electrically conductive.

14. The device as claimed in any one of claims 12 or 13, **characterized in that** the pressure chamber (D) has an electrically conductive base (1), in particular of copper.

15. The device as claimed in claim 12, **characterized in that** the second electrode has at least one first slide element (101, 102) which is mounted displaceably back and forth transversely to the first direction (R) in an opening (81, 82) of the pressure chamber (D) between a first and a second position, the at least one first slide element (101, 102) being configured such that, in the first position, an abutment end (103, 104) thereof is spaced from a shell region (13a) of the housing (13) which surrounds the opening (0) transversely to the first direction (R) and that, in the second position, the abutment end (103, 104) is pressed against the shell region (13a) transversely to the first direction (R), so that an electrically conductive connection between the abutment end (103, 104) and the shell region (13a) is established.

16. The device as claimed in claim 15, **characterized in that** the second electrode has a further, second slide element (102) which is mounted displaceably back and forth transversely to the first direction (R) between a first and a second position in a second opening (82) of the pressure chamber (D).

17. The device as claimed in claims 15 and 16, **characterized in that** the second slide element (102) is located opposite the first slide element (101) transversely to the first direction (R).

18. The device as claimed in claim 16 or 17, **characterized in that** the two slide elements (101, 102) are configured to press against the housing (13) in their respective second positions in such a manner that the housing (13) is clamped between the two slide elements (101, 102) transversely to the first direction (R) .

19. The device as claimed in claim 14 and any one of claims 15 to 19 insofar as it relates to claim 14, **characterized in that** the pressure chamber (D) has a wall (3), in particular of a steel, which is connected to the base (1) via an electrical insulator (2).

20. The device as claimed in claim 14 and any one of claims 15 to 19 insofar as it relates to claim 16, **characterized in that** the pressure chamber (D) has an electrically insulating cover (7), in particular of Pertinax, which is located opposite the base (1) in the first direction (R).

21. The device as claimed in any one of claims 12 to 20, **characterized in that** the displaceable element (10) passes into the pressure chamber (D) through a continuous (8) of the pressure chamber (D).

22. The device as claimed in claim 21, **characterized in that** the continuous (8) is sealed by means of an annular seal (9), in particular of PTFE.

23. The device as claimed in claim 21 or 22, **characterized in that** the opening (8) has an inner face (8a) oriented towards the displaceable element (10) with a groove running around the opening (8), in which groove the annular seal (9) is arranged.

## Revendications

1. Procédé de fabrication d'un générateur de gaz, qui est réalisé et prévu pour être monté dans un dispositif airbag pour un véhicule automobile, comprenant les étapes suivantes consistant à :
- mettre à disposition un carter (13) du générateur de gaz (G) dans une chambre de pression (D), le carter (13) présentant une ouverture (O) formée par l'absence de fond (11) du carter (13), par le biais de laquelle le carter (13) peut être rempli de gaz,
- mettre à disposition un obturateur (11) formé par le fond du carter dans la chambre de pression (D) pour fermer l'ouverture (O) de manière étanche au gaz,
- fixer le carter (13) transversalement à un premier sens (R) dans la chambre de pression (D),
- réaliser une fente annulaire entre l'obturateur (11) et le bord (12) du carter, par le fait que l'obturateur (11) est éloigné du carter (13) suivant le premier sens (R) à l'aide de la première électrode (10),
- introduire du gaz dans la chambre de pression (D) de sorte que le gaz arrive dans le carter (13) par le biais de l'ouverture (O), et
- relier l'obturateur (11) au carter (13) pour fermer l'ouverture (O) de manière étanche au gaz de telle sorte que l'obturateur (11) recouvre l'ouverture (O) à l'état fermé,
dans lequel, avant la réalisation de la fente annulaire, le carter (13) est centré transversalement au premier sens (R) par rapport à l'obturateur (11) en poussant l'obturateur (11) suivant le premier sens (R) contre le bord (12) du carter (13), ou, après l'étape consistant à fixer le carter (13), l'obturateur (11) est centré dans l'ouverture (O) par rapport à la chambre de pression (D) dans un plan orienté transversalement au premier sens (R) en poussant l'obturateur (11) contre le bord (12) du carter (13) et cependant alignant l'obturateur (11) dans l'ouverture (O) transversalement au premier sens (R).

2. Procédé selon la revendication 1, **caractérisé en ce que** l'obturateur (11) est relié au carter (13) par soudage par résistance.

3. Procédé selon l'une quelconque des revendications précédentes, **caractérisé en ce qu'**après remplissage du carter (13) en gaz, l'obturateur (11) est poussé suivant le premier sens (R) contre un bord (12) du carter (13) bordant l'ouverture (O).

4. Procédé selon l'une quelconque des revendications précédentes, **caractérisé en ce que** l'obturateur (11) est poussé contre le bord (12) du carter (13) à l'aide d'une première électrode (10) configurée pour le soudage par résistance.

5. Procédé selon l'une quelconque des revendications 2 à 4, **caractérisé en ce que** le carter (13) est fixé à l'aide d'une deuxième électrode (16 ; 101, 102) configurée pour le soudage par résistance.

6. Procédé selon la revendication 5, **caractérisé en ce que** le carter (13) est introduit dans un évidement (16a) de la deuxième électrode (16) pour être fixé.

7. Procédé selon la revendication 5, **caractérisé en ce que** le carter (13) est fixé transversalement au premier sens (R) à l'aide d'une deuxième électrode (101, 102) logée de manière mobile à la chambre de pression (D).

8. Procédé selon la revendication 4 ou l'une quelconque des revendications 5 à 7 dans la mesure où il est fait référence à la revendication 4, **caractérisé en ce qu'**après remplissage du carter (13) en gaz, l'obturateur (11) est poussé contre le bord (12) du carter (13) à l'aide de la première électrode (10) de telle sorte qu'une liaison électrocondutrice est établie entre le carter (13) et l'obturateur (11).

9. Procédé selon la revendication 5 ou l'une quelconque des revendications 6 à 8 dans la mesure où il est fait référence à la revendication 5, **caractérisé en ce qu'**une liaison électroconductrice est établie entre la deuxième électrode (16 ; 101, 102) et le carter (13).

10. Procédé selon les revendications 8 et 9, **caractérisé en ce que** pour relier le carter (13) à l'obturateur (11) par soudage par résistance, une tension est appliquée entre les deux électrodes (10, 16 ; 101, 102), qui induit un flux de courant entre le carter (13) et l'obturateur (11) par le biais du bord (12) du carter (13).

11. Procédé selon l'une quelconque des revendications précédentes, **caractérisé en ce que** lors de l'introduction du gaz, la pression du gaz dans la chambre de pression (D) est substantiellement supérieure à la pression de l'atmosphère entourant la chambre de pression (D), en particulier supérieure ou égale à 600 bar.

12. Dispositif de fabrication d'un générateur de gaz pour un dispositif airbag pour un véhicule automobile, comportant :
- une chambre de pression (D) pouvant être remplie de gaz, qui est realisée et prévue pour recevoir un carter (13) du générateur de gaz (G), qui peut être rempli de gaz par le biais d'une ouverture (O) du carter (13), de sorte que le gaz introduit dans la chambre de pression (D) puisse arriver dans le carter (13) par l'ouverture (O) et
- un élément (10) pouvant être déplacé suivant un premier sens (R) d'une première à une deuxième position, qui est conçu pour pousser dans sa deuxième position un obturateur (11) du générateur de gaz (G), agencé dans la chambre de pression (D), suivant le premier sens (R) contre le carter (13) rempli de gaz pour fermer l'ouverture (O), l'élément (10) comprenant une première électrode qui est réalisée pour être reliée à l'obturateur (11) de manière électroconductrice dans la deuxième position,
- une deuxième électrode (1, 16 ; 101, 102) agencée au moins en partie dans la chambre de pression (D), qui est réalisée pour être reliée au carter (13) de manière électrocondutrice,
dans lequel l'élément (10) est conçu et prévu pour pousser dans la deuxième position, l'obturateur (11) formé par un fond du carter (13) contre le carter (13) de telle sorte que l'obturateur (11) recouvre l'ouverture (O) formée par l'absence de fond de carter (11), à l'extérieur du carter (13),
**caractérisé en ce que**
la deuxième électrode présente un corps (16) avec un évidement (16a), qui est réalisé pour recevoir une section d'extrémité (14) du carter (13), le corps (16) étant éloigné d'un fond (1) de la chambre de pression (D) dans la chambre de pression (D), ou **en ce que** la deuxième électrode (101, 102) est logée de manière déplaçable à la chambre de pression (D).

13. Dispositif selon la revendication 12, **caractérisé en ce que** l'élément (10) est réalisé et prévu pour pousser dans la deuxième position l'obturateur (11) contre un bord (12) du carter (13) bordant l'ouverture (O) à l'extérieur de l'ouverture (O), afin d'induire, dans le cas d'éléments de carter (13, 11) électroconducteurs, une liaison électroconductrice entre le carter (13) et l'obturateur (11).

14. Dispositif selon l'une quelconque des revendications 12 ou 13, **caractérisé en ce que** la chambre de pression (D) présente un fond (1) électroconducteur, en particulier en cuivre.

15. Dispositif selon la revendication 12, **caractérisé en ce que** la deuxième électrode présente au moins un premier coulisseau (101, 102), qui est logé de manière déplaçable dans un sens et dans l'autre entre une première et une deuxième position, transversalement au premier sens (R) dans un dégagement (81, 82) de la chambre de pression (D), l'au moins un premier coulisseau (101, 102) étant réalisé pour être éloigné dans la première position avec une extrémité d'application (103, 104) transversalement au premier sens (R), d'une zone enveloppe (13a) du carter (13) entourant l'ouverture (O) et pour être poussé dans la deuxième position avec l'extrémité d'application (103, 104) transversalement au premier sens (R) contre la zone enveloppe (13a) de sorte à établir une liaison électroconductrice entre l'extrémité d'application (103, 104) et la zone enveloppe (13a).

16. Dispositif selon la revendication 15, **caractérisé en ce que** la deuxième électrode présente un autre, deuxième coulisseau (102), qui est logé de manière déplaçable dans un sens et dans l'autre entre une première et une deuxième position, transversalement au premier sens (R) dans un deuxième dégagement (82) de la chambre de pression (D).

17. Dispositif selon les revendications 15 et 16, **caractérisé en ce que** le deuxième coulisseau (102) fait face au premier coulisseau (101) transversalement au premier sens (R).

18. Dispositif selon la revendication 16 ou 17, **caractérisé en ce que** les deux coulisseaux (101, 102) sont réalisés pour pousser dans leur deuxième position respective contre le carter (13) de telle sorte que celui-ci est serré transversalement au premier sens (R) entre les deux coulisseaux (101, 102).

19. Dispositif selon la revendication 14 et l'une quelconque des revendications 15 à 19 dans la mesure où il est fait référence à la revendication 14, **caractérisé en ce que** la chambre de pression (D) présente une paroi (3), en particulier en acier, qui est reliée au fond (1) par le biais d'un isolant électrique (2).

20. Dispositif selon la revendication 14 et l'une quelconque des revendications 15 à 19, dans la mesure où il est fait référence à la revendication 14, **caractérisé en ce que** la chambre de pression (D) présente un recouvrement (7) électriquement isolant, en particulier en Pertinax, qui fait face au fond (1) suivant le premier sens (R).

21. Dispositif selon l'une quelconque des revendications 12 à 20, **caractérisé en ce que** l'élément mobile (10) est guidé dans la chambre de pression (D) par un évidement traversant (8) de la chambre de pression (D).

22. Dispositif selon la revendication 21, **caractérisé en ce que** l'évidement traversant (8) est étanché à l'aide d'un joint annulaire (9), en particulier en PTFE.

23. Dispositif selon la revendication 21 ou 22, **caractérisé en ce que** l'évidement (8) présente une face intérieure (8a) tournée vers l'élément mobile (10), avec une rainure entourant l'évidement (8), dans laquelle est agencé le joint annulaire (9).
